# EUROPEAN PATENT APPLICATION

(11) **EP 4 738 951 A1**
(43) Date of publication of application: **06.05.2026**
(21) Application number: 23942923.6
(22) Date of filing: 30.06.2023
(51) Int. Cl.: H04W 72/04

(54) **RESOURCE CONFIGURATION METHOD, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: LIN, Xue, Dongguan, Guangdong 523860 (CN); YOU, Xin, Dongguan, Guangdong 523860 (CN); WU, Hao, Dongguan, Guangdong 523860 (CN)
(74) Representative: Taor, Simon Edward William
(86) International application number: PCT/CN2023/104330
(87) International publication number: WO 2025/000415

(57) **Abstract**

The present application relates to a resource configuration method, a terminal device, a network device, a chip, a computer readable storage medium, a computer program product, a computer program, and a communication system. The resource configuration method comprises: a terminal device receives first resource configuration information from a network device, wherein the first resource configuration information is related to first information of a target service; and the terminal device determines, on the basis of the first resource configuration information, a resource for transmitting data and/or the state of the resource. Embodiments of the present application can improve resource scheduling efficiency and reduce transmission delay.

## Description

### TECHNICAL FIELD

The present disclosure relates to the field of communication, and in particular, to methods for resource configuration, a terminal device, a network device, a chip, a computer-readable storage medium, a computer program product, a computer program, and a communication system.

### BACKGROUND

High requirements for delay and communication service reliability are proposed for 5th-Generation (5G) services. However, the complex service transmission process inevitably brings transmission delay, so it is necessary to consider how to reduce the transmission delay.

### SUMMARY

The embodiments of the present disclosure provide a method for resource configuration. The method includes the following operations.

A terminal device receives the first resource configuration information from a network device. The first resource configuration information is related to the first information of a target service.

The terminal device determines resource(s) for transmitting data and/or a state of the resource(s) based on the first resource configuration information.

The embodiments of the present disclosure provide a method for resource configuration. The method includes the following operation.

A network device sends the first resource configuration information to a terminal device. The first resource configuration information is related to the first information of a target service, and the first resource configuration information is used for the terminal device to determine resource(s) for transmitting data and/or a state of the resource(s).

The embodiments of the present disclosure provide a terminal device. The terminal device includes the first communication module and the first processing module.

The first communication module is configured to receive the first resource configuration information from a network device. The first resource configuration information is related to the first information of a target service.

The first processing module is configured to determine resource(s) for transmitting data and/or a state of the resource(s) based on the first resource configuration information.

The embodiments of the present disclosure provide a network device. The network device includes the second communication module.

The second communication module is configured to send the first resource configuration information to a terminal device. The first resource configuration information is related to the first information of a target service, and the first resource configuration information is used for the terminal device to determine resource(s) for transmitting data and/or a state of the resource(s).

The embodiments of the present disclosure provide a terminal device. The terminal device includes a processor and a memory. The memory is configured to store a computer program, and the processor is configured to invoke and execute the computer program stored in the memory to cause the terminal device to perform the above method for resource configuration.

The embodiments of the present disclosure provide a network device. The network device includes a processor and a memory. The memory is configured to store a computer program, and the processor is configured to invoke and execute the computer program stored in the memory to cause the network device to perform the above method for resource configuration.

The embodiments of the present disclosure provide a chip. The chip is configured to implement the above method for resource configuration.

Specifically, the chip includes a processor configured to invoke and execute a computer program from a memory to cause a device on which the chip is mounted to perform the above method for resource configuration.

The embodiments of the present disclosure provide a computer readable storage medium. The computer readable storage medium is configured to store a computer program that causes a device to perform the above method for resource configuration when the computer program is executed by the device.

The embodiments of the present disclosure provide a computer program product including computer program instructions that cause a computer to execute the above method for resource configuration.

The embodiments of the present disclosure provide a computer program that, when run on a computer, causes the computer to execute the above method for resource configuration.

The embodiments of the present disclosure provide a communication system including a terminal device and a network device for perform the above method.

In the embodiments of the present disclosure, the first resource configuration information is related to the first information of the target service, and the network device sends the first resource configuration information, so that the terminal device determines the resource(s) for transmitting data and/or the state of the resource(s). In this way, the transmission resource(s) is scheduled according to the service information, which is beneficial to improving the resource scheduling efficiency and reducing the transmission delay.

### BRIEF DESCRIPTION OF THE DRAWINGS

FIG. 1 is a schematic diagram of a communication system according to an embodiment of the present disclosure.
FIG. 2 is a schematic flowchart of a method for resource configuration according to an embodiment of the present disclosure.
FIG. 3 is a schematic flowchart of a method for resource configuration according to another embodiment of the present disclosure.
FIG. 4 is a schematic diagram of probability information according to an embodiment of the present disclosure.
FIG. 5 is a schematic diagram of application example 3 in the embodiment of the present disclosure.
FIG. 6 is a schematic diagram of application example 4 in the embodiment of the present disclosure.
FIG. 7 is a schematic block diagram of a terminal device according to an embodiment of the present disclosure.
FIG. 8 is a schematic block diagram of a network device according to an embodiment of the present disclosure.
FIG. 9 is a schematic block diagram of a network device according to another embodiment of the present disclosure.
FIG. 10 is a schematic block diagram of a communication device according to an embodiment of the present disclosure.
FIG. 11 is a schematic block diagram of a chip according to an embodiment of the present disclosure.
FIG. 12 is a schematic block diagram of a communication system according to an embodiment of the present disclosure.

### DETAILED DESCRIPTION

Hereinafter, the technical solutions in the embodiments of the present disclosure will be described with reference to the drawings in the embodiments of the present disclosure.

The technical solutions of the embodiments of the present disclosure may be applied to various communication systems, such as a New Radio (NR) system, a Non-Terrestrial Networks (NTN) system, a Wireless Fidelity (WiFi), a 5th-Generation (5G) system, a 6th-Generation (6G) system, or other communication systems, and the like.

Generally speaking, the conventional communication system supports a limited number of connections and is easy to implement, however, with the development of communication technology, the mobile communication system will support not only conventional communication, but also terminal-to-terminal direct communication such as, for example, Device to Device (D2D) communication, Machine to Machine (M2M) communication, Machine Type Communication (MTC), Vehicle to Vehicle (V2V) communication, or Vehicle to everything (V2X) communication, and the like, and the embodiments of the present disclosure may also be applied to these communication systems.

In one embodiment, the communication system in the embodiments of the present disclosure may be applied to a Carrier Aggregation (CA) scenario, a Dual Connectivity (DC) scenario, or a Standalone (SA) network layout scenario.

In one embodiment, the communication system in the embodiments of the present disclosure may be applied to an unlicensed spectrum, and the unlicensed spectrum may also be considered as a shared spectrum. Alternatively, the communication system in the embodiments of the present disclosure may also be applied to a licensed spectrum, and the licensed spectrum may also be considered as a non-shared spectrum.

In the embodiments of the present disclosure, various embodiments are described in combination with a network device and a terminal device. The terminal device may also be referred to as a User Equipment (UE), an access terminal, a subscriber unit, a subscriber station, a mobile station, a mobile stage, a remote station, a remote terminal, a mobile device, a user terminal, a terminal, a wireless communication device, a user agent or a user device, and the like.

The terminal device may be a STATION (ST) in a WLAN, a cellular telephone, a cordless telephone, a Session Initiation Protocol (SIP) telephone, a Wireless Local Loop (WLL) station, a Personal Digital Assistant (PDA) device, a handheld device having wireless communication capabilities, a computing device or other processing device connected to a wireless modem, an in-vehicle device, a wearable device, a terminal device in a next generation communication system such as an NR network, or a terminal device in a future evolved Public Land Mobile Network (PLMN) network, or the like.

In the embodiments of the present disclosure, the terminal device may be deployed on land, including indoor or outdoor, handheld, wearable, or vehicle-mounted. It may also be deployed on the water surface (such as ships, etc.) or under the water surface (such as submarines, etc.). It may also be deployed in the air (such as, on aircraft, balloons and satellites, etc.).

In the embodiments of the present disclosure, the terminal device may be a Mobile Phone, a tablet (Pad), a computer with a wireless transceiver function, a Virtual Reality (VR) terminal device, an Augmented Reality (AR) terminal device, a terminal device in personal internet of things (PIoT), a wireless terminal device in an industrial control, a wireless terminal device in self driving, a wireless terminal device in a remote medical, a wireless terminal device in a smart grid, a wireless terminal device in transportation safety, a wireless terminal device in a smart city, a wireless terminal device in a smart home, or the like.

As an example and not limitation, in the embodiments of the present disclosure, the terminal device may also be a wearable device. The wearable device may also be referred to as a wearable smart device, which is the general name of wearable devices developed by applying wearable technology to intelligently design daily wear, such as glasses, gloves, watches, clothing and shoes. The wearable device is a portable device that is worn directly on the body or integrated into the clothes or accessories of the user. The wearable device is not only a kind of hardware device, but also realizes powerful functions through software support, data interaction and cloud interaction. Generalized wearable smart devices have features of full functions, large size and realizing complete or partial functions without relying on smart phones, such as a smart watch or smart glasses, and only focus on a certain type of application functions and need to be used in cooperation with other devices such as smart phones, for example, various smart bracelets, smart jewelries, etc. which may detect physical signs.

In the embodiments of the present disclosure, the network device may be a device for communicating with a mobile device, the network device may be an Access Point (AP) in a WLAN, a relay station, an AP, a in-vehicle device, a wearable device, a network device (gNB) in an NR network, a network device in a future evolved PLMN network, a network device in an NTN network, or the like.

By way of example and not limitation, in the embodiments of the present disclosure, the network device may have mobile characteristics, for example, the network device may be a mobile device. Alternatively, the network device may be a satellite or a balloon station. For example, the satellite may be a low earth orbit (LEO) satellite, a medium earth orbit (MEO) satellite, a geostationary earth orbit (GEO) satellite, a High Elliptical Orbit (HEO) satellite, or the like. Alternatively, the network device may be a base station provided on a land, a water area, or the like.

In the embodiments of the present disclosure, the network device may provide a service for a cell, and the terminal device communicates with the network device through a transmission resource (for example, frequency domain resource or spectrum resource) used by the cell. The cell may be a cell corresponding to the network device (for example, base station). The cell may belong to a macro base station or a base station corresponding to a Small cell. The Small cell here may include a Metro cell, a Micro cell, a Pico cell, a Femto cell, etc. These small cells have the characteristics of small coverage and low transmission power, and are suitable for providing high-speed data transmission services

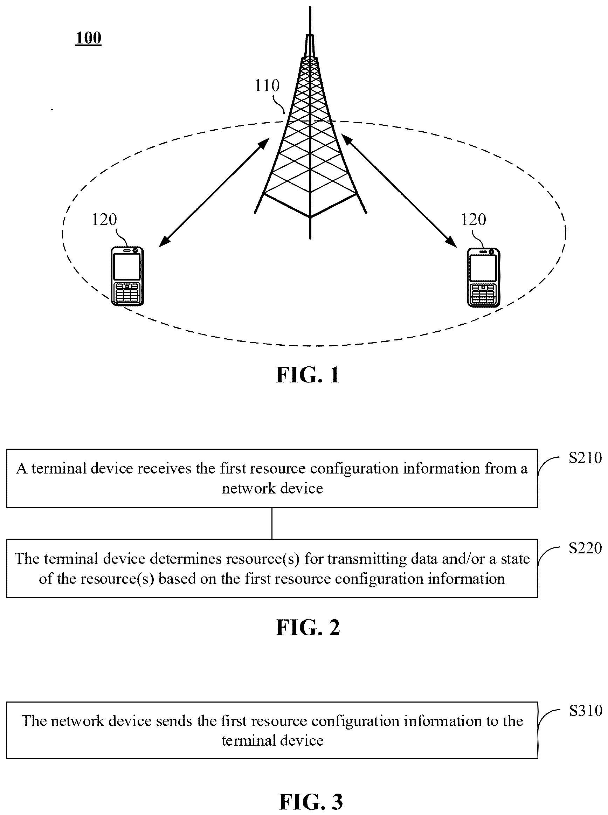

FIG. 1 exemplarily illustrates a communication system 100. The communication system includes a network device 110 and two terminal devices 120. In one possible implementation, the communication system 100 may include multiple network devices 110, and the coverage range of each network device 110 may include another number of terminal devices 120, which is not limited in the embodiments of the present disclosure.

It should be understood that the terms "system" and "network" are often used interchangeably herein. Herein, the term "and/or" is only used for describing an association relationship between association objects, and represents that there may be three relationships, for example, A and/or B, which may mean that A exists alone, A and B exist simultaneously, and B exists alone. In addition, the character "/" in the present disclosure generally indicates that there is an "or" relationship between the association objects.

It should be understood that the "indication" mentioned in the embodiments of the present disclosure may be a direct indication, an indirect indication, or represent an association relationship. For example, A indicates B, which may represent that A directly indicates B, for example, B may be acquired by A. It may also represent that A indicates B indirectly, for example A indicates C, and B may be acquired through C. It may also represent that there is an association relationship between A and B.

In the description of the embodiments of the present disclosure, the term "correspondence" may indicate that there is a direct correspondence or indirect correspondence relationship between the two objects, may indicate that there is an association relationship between the two objects, or may indicate a relationship between indicating and being instructed, configuring and being configured, or the like.

In order to facilitate understanding of the technical solutions of the embodiments of the present disclosure, some basic processes and basic concepts related to the embodiments of the present disclosure will be briefly described below. It should be understood that the basic processes and basic concepts described below do not limit the embodiments of the present disclosure.

### (1) Machine learning

Machine learning is one of the methods to implement artificial intelligence, which provides systems with the ability to automatically learn and improve from experience without display programming. Machine learning may be classified into three types: supervised learning, unsupervised learning and reinforcement learning.

Supervised learning, also known as Learning with supervision. In the supervised learning, a learning model (also called a function) may be learned or created from training materials, and new instances are inferred based on this model. Training materials are composed of input objects (usually vectors) and expected output. The output of a function may be a continuous value (called regression analysis), or a prediction of a classification label (called classification). A task of supervised learner is to predict the output of this function for any possible input after observing some pre-labeled training examples (inputs and expected outputs). To achieve this goal, learners must generalize from existing materials to unobserved situations in a "reasonable" manner.

Unsupervised learning is a class of machine learning techniques used to find models in data. The input data used by the unsupervised learning algorithm is unlabeled, which means that the data only provides the input variable (independent variable X), but not the corresponding data variable (dependent variable Y). In unsupervised learning, the algorithm itself will discover interesting structures in the data and classify them according to the characteristics or attributes of the data.

Reinforcement learning emphasizes how to act based on the environment to maximize the expected benefits. The reinforcement learning is the third basic machine learning method besides supervised learning and unsupervised learning. Different from the supervised learning, the reinforcement learning does not require labeled input-output pairs, nor does it require precise correction for non-optimal solutions. Its focus lies in finding a balance between exploration (for unknown areas) and usage (of existing knowledge). The exchange of "exploration-usage" in reinforcement learning is most studied in multi-armed slot machine problems and finite Markov decision processes (MDP). In machine learning problems, the environment is usually abstracted as MDP, because many reinforcement learning algorithms can only use dynamic programming methods under this assumption. The main difference between traditional dynamic programming methods and reinforcement learning algorithms is that the latter does not require knowledge about MDP, and it is aimed at large-scale MDP where the exact method cannot be found.

### (2) Artificial Intelligence (AI) and wireless communication

Compared with the past, the current wireless communication system provides greater flexibility, emphasizes the wide application of different scenarios and the full utilization of limited resources. However, the basic principles of most current work are mostly based on theoretical modeling of the actual communication environment or simple parameter selection. The gains brought by this basic working manner are gradually weakening in changeable scenarios and complex communication environments. In view of this situation, it is necessary to adopt new methods and ideas combined with traditional wireless communication theories and systems, so as to find another way to break the performance bottleneck and further improve the performance of wireless communication systems.

### (3) Pre-configured resources

### 1. Uplink pre-configured resources

Uplink grant-free transmission, also known as uplink-configured grant transmission (PUSCH Transmission with a Configured Grant). As a low-latency, low-overhead uplink transmission solution, uplink grant-free resources are adopted by the NR R15 protocol version and are used for uplink transmission in typical service scenarios such as URLLC. Configured Grant (CG) resources are classified into two types: CG type1 and CGC type2.

All parameters of CG type1 are configured by the base station through Radio Resource Control (RRC) signaling, and may be used after configuration.

A part of parameters of CG type2 are configured by the base station through RRC signaling, and other parameters are configured by the base station through activated Downlink Control Information (DCI). Only after receiving the activated DCI, the UE can use CG type2 resources for Physical Uplink Shared Channel (PUSCH) transmission.

The two types of CG resources have their own advantages. Compared with CG type2, CG type1 can achieve lower transmission delay and lower low-level control signaling overhead. Compared with CG type1, CG type2 can achieve more flexible parameter reconfiguration.

### 2. Downlink pre-configured resources

Semi-Persistent Scheduling (SPS) is a pre-configured resource for downlink data transmission, and is suitable for periodic small packet data transmission scenarios. Compared with dynamic scheduling, the UE may directly receive downlink data on the Physical Downlink Shared Channel (PDSCH) based on the SPS configuration, and the delay and power consumption required for blind detection of DCI are eliminated. The network configures SPS resources for the terminal through RRC signaling, and each Bandwidth Part (BWP) may include one or more sets of SPS configurations. Before using SPS resources to transmit downlink data, the network needs to activate SPS resources through DCI.

FIG. 2 is a schematic flowchart of a method for resource configuration according to an embodiment of the present disclosure. This method is applied to the system illustrated in FIG. 1 optionally, but is not limited thereto. The method includes at least part of the following contents.

In operation S210, a terminal device receives the first resource configuration information from a network device. The first resource configuration information is related to the first information of a target service.

In operation S220, the terminal device determines resource(s) for transmitting data and/or a state of the resource(s) based on the first resource configuration information.

It is understood that the first resource configuration information is used for the terminal device to determine the resource(s) for transmitting data and/or the state of the resource(s). Exemplarily, the first resource configuration information may be used to instruct the terminal device to update resource(s), recover resource(s), activate resource(s), or deactivate resource(s). For example, the first resource configuration information may include all or part of the configuration parameters of the resource(s) for instructing the terminal device to update the resource(s) or to recover the resource(s). For another example, the first resource configuration information may include activation or deactivation state indication information for instructing the terminal device to activate or deactivate the resource(s).

Corresponding to the above embodiment, the present disclosure further provides a method for resource configuration performed by a network device. FIG. 3 is a schematic flowchart of a method for resource configuration according to another embodiment of the present disclosure. This method is applied to the system illustrated in FIG. 1 optionally, but is not limited thereto. The method includes the following operation.

In operation S310, the network device sends the first resource configuration information to the terminal device. The first resource configuration information is related to the first information of the target service, and the first resource configuration information is used for the terminal device to determine resource(s) for transmitting data and/or a state of the resource(s).

In the above embodiments, the resource(s) may include a frequency domain resource and/or a time domain resource for transmitting data of the target service. Here, the transmission includes sending and/or receiving. In other words, the resource(s) may include an uplink resource and/or a downlink resource. Exemplarily, the resource may include a dynamic transmission resource or a pre-configured resource. For example, the resource may include a CG resource for uplink transmission, and/or a SPS resource for downlink transmission, and/or a dynamically scheduled uplink/downlink resource.

In the above embodiment, the first resource configuration information is related to the first information of the target service. Exemplarily, the first resource configuration information may be determined by the network device based on the first information of the target service, or may be determined by the network device based on other information related to the first information of the target service.

Alternatively, the first information may be determined by the network device or by the terminal device. For example, if the first information is determined by the network device, the network device may determine the first resource configuration information according to the first information. For another example, if the first information is determined by the terminal device, the terminal device may send reporting information related to the first information to the network device, and the network device may determine the first resource configuration information based on the reporting information.

In the embodiments of the present disclosure, the type of the target service is not limited, which may include any communication service, such as a voice service, a short message service, a video service, etc.. In some embodiments, the target service may include a delay-sensitive service. It may be understood that the target service may include an uplink service or a downlink service.

In the above embodiments, the first information is information related to the target service. Exemplarily, the first information may include transmission information such as an arrival time, a data amount, and a period of the target service, or other information related to the transmission information of the target service.

According to the method for resource configuration of the above embodiments, the first resource configuration information is related to the first information of the target service. The network device sends the first resource configuration information, so that the terminal device determines the resource(s) for transmitting data and/or the state of the resource(s). In this way, the network device schedules the transmission resource(s) according to the related information of the service, and the resource scheduling is matched with the target service, which is beneficial to improve the resource scheduling efficiency and reduce the transmission delay.

In some embodiments, the first information includes prediction information determined based on the first model. In other words, the first information may include prediction information output by the first model for the target service. Exemplarily, the prediction information may be a prediction result for one or more types of transmission information of an arrival time, a data amount, and a period of the target service.

Alternatively, the first model may be a machine learning model, including, but not limited to, a supervised learning model, an unsupervised learning model, or a reinforcement learning model. In practical application, the relevant information before and after the occurrence of the target service may be collected, and the relevant information before and after the occurrence of the target service may be used to train the first model, so that the first model may predict the occurrence of the target service or the change of the target service according to similar information.

According to the above embodiments, the network device may perform resource configuration based on prediction information related to the target service. Compared with scheduling dynamic resources by the network device according to the received Buffer Status Report (BSR) when the service arrives, in the above embodiments, resource scheduling is performed in advance based on the prediction information, thereby avoiding delay due to scheduling, optimizing resource scheduling efficiency and reducing transmission delay.

In some embodiments, the first information is related to whether transmission information of the target service changes.

In some embodiments, the change of the transmission information includes at least one of: an arrival of the target service; a change of a data amount of the target service; or a change of a period of the target service. Exemplarily, the change of the transmission information may include that an arrival of the target service, a change of the data amount, or a change of the period. Alternatively, the change of the transmission information may include that the change of the data amount and the period of the target service.

In some embodiments, the first information includes at least one of: a type of the target service; the target service being an uplink service or a downlink service; whether transmission information of the target service changes; time information at which the transmission information of the target service changes; probability information that the transmission information of the target service changes; period information of the target service; a data amount of the target service; a duration of the target service; or identifier information of the target service.

In practical applications, the first information may include one type of the above information or a combination of multiple types of the above information. An exemplary description will be made below.

Exemplarily, a service, i.e., the target service, whose transmission information will change can be predicted based on the first model. Based on this, the first information may include indication information of the target service, that is, information for indicating the target service, for example, a type of the target service, a transmission direction (uplink or downlink), identifier information, or the like. The type of the target service is, for example, a voice service, a short message service, a video service, a delay-sensitive service, or the like. The identifier information may include any Identifier (ID) information related to the target service, such as a Protocol Data Unit (PDU) session ID, an IP flow, a 5G QoS Identifier, a Quality of Service (QoS) flow ID, a Data Radio Bearer (DRB) ID, a Logical Channel (LCH) ID, a Logical Channel Group (LCG) ID, etc.

Exemplarily, the first information may include one or more types of determination information predicted by the first model for whether the transmission information of the target service changes, time information, or probability information. That is, the first information may include at least one of whether the transmission information of the target service changes, time information at which the transmission information of the target service changes, or probability information that the transmission information of the target service changes.

Exemplarily, the first information may include transmission information, after the change, predicted by the first model for the target service, such as period information, data amount, duration, and the like of the target service. The period information of the target service may include whether the target service has periodicity and/or a period interval (or period size) of the target service.

Exemplarily, the first information may not only include indication information of the target service, but also include at least one of determination information of whether the transmission information changes, time information, and probability information, or may not only include indication information of the target service, but also include transmission information after the change.

It should be noted that the implementation manner of the first information is not limited to the information combination of the above example, and may be implemented according to different application scenarios, system agreements, protocol agreements, or actual requirements, which will not be listed here.

In some embodiments, whether the transmission information of the target service changes includes at least one of: whether the transmission information of the target service changes on each time unit in the first time window after the first time; or whether the transmission information of the target service changes in the first time window.

That is, whether the transmission information of the target service changes may include whether the change occurs on each time unit in a time window, or whether the change occurs in the entire time window. The time window may be determined based on the first time.

In some embodiments, the time information at which the transmission information of the target service changes includes an interval between a time at which the transmission information of the target service changes and the first time. That is, the time at which the transmission information of the target service changes may be represented by an interval from the first time. Here, the interval may also be referred to as an offset, a bias, or the like. The first time may be set with reference to the above embodiment.

In some embodiments, the probability information that the transmission information of the target service changes includes at least one of: probability information that the transmission information of the target service changes on each time unit in the first time window after the first time; probability information that the transmission information of the target service changes in the first time window; or probability information that the transmission information of the target service changes in each of the M time units. The M time units are determined based on the probability that the transmission information of the target service changes in each time unit in the first time window, and M is an integer equal to or greater than 1.

That is, the probability information that the transmission information of the target service changes may include the probability information that the change occurs in each time unit in a time window, probability information that the change occurs in the entire time window, or probability information in a specific time unit in the time window. The time window may be determined based on the first time.

In some embodiments, the M time units may be determined according to an ordering of magnitudes of probabilities on respective time units. For example, the M time units may be M time units having the greatest probabilities in the first time window.

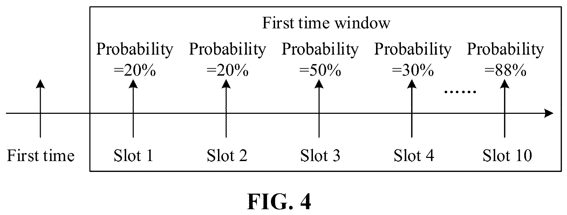

FIG. 4 illustrates a schematic diagram of probability information according to an embodiment of the present disclosure. Taking the time unit being a slot, and the first time window including 10 slots as an example, the probability information that the transmission information of the target service changes may include the probability information for the entire first time window, the probability information for each slot in the first time window, or the probability information for two slots having the greatest probabilities in the first time window, such as slot 3 and slot 10.

Alternatively, the probability information in the first information may include the probability that the transmission information changes or an index value of a range corresponding to the probability. In other words, the probability information may be a specific probability value, or may be an index value for indicating a probability range. For example, it is assumed that a probability within [0%, 10%] corresponds to an index value of 0, a probability within [11%, 20%] corresponds to an index value of 1, and so on. When the probability that the transmission information of the target service changes in a certain slot is 11%, the probability information may be 11% or the index value 1 of the probability range [11%, 20%].

In some embodiments, the above first time may be a time at which the first information is determined, or may be a time after the first information is determined. For example, in a case that the prediction information is determined by using the first model, the first time may be an operation time of the first model, a time at which the first model outputs the prediction information, or a time predicted by the first model.

In some embodiments, the above time unit may be a slot, a symbol, a subframe, a radio frame, a millisecond (ms), a second (s), a minute (min), an hour, or a day. That is, whether the transmission information of the target service changes may include whether the transmission information changes every slot, every symbol, every subframe, every radio frame, every millisecond, every second, every minute, every hour, or every day in the first time window.

In some embodiments, the first information further includes the first time. Exemplarily, in a case that the first information includes prediction information determined based on the first model, the prediction information may further include the first time. For example, the first model may predict that the transmission information of the target service will change, and may also predict a time window in which the information of the target service will change, and output the first time to determine the time window.

As described in the above embodiments, the first resource configuration information may be determined based on the first information or information related to the first information. In some embodiments, the first resource configuration information is determined based on the first information and/or the first reporting information, related to the first information, sent by the terminal device.

Accordingly, in some embodiments, the method for resource configuration further includes the following operation. The network device determines the first resource configuration information based on the first information and/or the first reporting information, related to the first information, sent by the terminal device.

In one embodiment, the first model may be deployed in the network device, and after obtaining prediction information of the target service by using the first model, the network device determines the first resource configuration information based on the prediction information.

In another embodiment, the first model may be deployed in the terminal device, and after obtaining prediction information of the target service by using the first model, the terminal device sends the first reporting information to the network device, and the network device determines the first resource configuration information based on the first reporting information.

In another embodiment, the first model may be deployed in the network device and the terminal device, and in a case that the network device predicts that the transmission information of the target service will change based on the first model, the network device may determine the first resource configuration information based on the prediction information. When the network device receives the first reporting information, the network device may determine the first resource configuration information based on the first reporting information.

In another embodiment, the first model may be deployed in the network device and the terminal device, and in a case that the network device predicts that the transmission information of the target service will change based on the first model and receives the first reporting information, the network device may determine the first resource configuration information based on the prediction information and the first reporting information.

In some embodiments, the first reporting information includes at least one of: the first report including the first information; or the first request including request information of the terminal device for the resource. The first request is determined based on the first information.

That is, in a case that the terminal device obtains the first information, for example, in a case that the first model is deployed in the terminal device and the first information may be predicted to be obtained based on the first model, the terminal device may report the first information to the network device through the first report, or may determine its own request information for the resource based on the first information, and report the request information to the network device.

In some embodiments, the first reporting information is determined based on the first information and the current resource configuration situation of the terminal device. For example, the terminal device may be based on the prediction information output from the first model and the current resource configuration situation.

In some embodiments, the first report further includes at least one of: a type of the target service; the target service being an uplink service or a downlink service; the first time used for determining the first time window in which transmission information of the target service changes; identifier information of the target service; or a priority of the target service.

Exemplarily, in a case that the terminal device obtains prediction information based on the first model, and the prediction information includes time information at which the target service changes and/or probability information that the target service changes, the terminal device may report, in addition to the prediction information, the type of the target service, a transmission direction (uplink or downlink), and the first time at which the first model outputs the prediction information to the network device through the first report.

Exemplarily, in a case that the terminal device obtains the prediction information based on the first model, and the prediction information includes the type of the target service, the identifier information, and the transmission direction, the terminal device may further report the priority of the target service to the network device through the first report.

It should be noted that the implementation manner of the first report is not limited to the information combination manner of the above examples, and may be implemented according to different application scenarios, system agreements, protocol agreements, or actual requirements, which will not be listed here.

In some embodiments, the priority of the target service, or the correspondence between the service type and the priority, may be configured by the network device, or pre-configured, or predefined by the protocol. Alternatively, the priority may be used for the network device to determine whether the first resource configuration information is to be determined for the target service. For example, in a case that the first report indicates that the transmission information of the target service will change, but the priority of the target service is low, the network device may not change the resource configuration, and may not need to determine and send the first resource configuration information. For another example, in a case that the first report indicates that the transmission information of the target service will change and the priority of the target service is high, the network device may determine and send the first resource configuration information to adjust the resource configuration of the terminal device, for example, update/recover/activate/deactivate the resource configuration of the terminal device.

As described above, the first time may be an operation time of the first model used to determine the first information, a time at which the first model determines the first information, or a time predicted by the first model.

In some embodiments, the request information includes at least one of: a resource type requested by the terminal device; index(es) of pre-configured resource(s) requested by the terminal device; a processing method for resource(s) requested by the terminal device; index(es) of candidate configuration(s) requested by the terminal device in at least one candidate configuration; configuration parameter information requested by the terminal device; starting time(s) of resource(s) requested by the terminal device; a number of resource(s) requested by the terminal device; or time length(s) of resource(s) requested by the terminal device.

In practical applications, the request information may include one type of the above information or a combination of multiple types of the above information. Several exemplary implementation manners are provided below.

Manner 1: The terminal device may determine that the requested resource type includes a pre-configured resource and/or a dynamically scheduled resource according to the first information and the current resource configuration situation, and carry the resource type in the first request. The pre-configured resource may include a CG resource and/or an SPS resource.

Manner 2: The network device may configure multiple pre-configured resources, for example, multiple CG resources and/or multiple SPS resources, for the terminal device in advance, and the terminal device may determine the requested CG resource(s) and/or the SPS resource(s) according to the first information, and carry the index(es) of the CG resource(s) and/or the index(es) of the SPS resource(s) in the first request.

Manner 3: The processing method for the resource may include configuring, updating, recovering, activating, or deactivating. The terminal device may determine the requested resource type and a corresponding processing method according to the first information, and carry the resource type and the processing method in the first request, for example, request to update a dynamically scheduled resource, request to activate/deactivate a pre-configured resource, or the like. Alternatively, in a case that the activation/deactivation of the pre-configured resource(s) is requested, the first request may further carry index(es) of the pre-configured resource(s).

Manner 4: The terminal device may determine the requested resource configuration in at least one candidate configuration based on the first information, and carry an index of the requested candidate configuration in the first request. Alternatively, one candidate configuration may correspond to all or part of configuration parameter information of a set of resource configurations, such as resource starting time, period interval, data amount, or the like.

Taking the period interval of the CG resource as an example, the second resource configuration information may include at least one candidate configuration, each candidate configuration corresponds to an index value, and the terminal device may select the closest candidate configuration among the at least one candidate configuration based on the period information in the prediction information, and carry the index of the candidate configuration in the first request.

Manner 5: The terminal device may determine requested configuration parameter information among multiple optional values of configuration parameter information according to the first information, and carry the requested configuration parameter information in the first request. Taking the configuration parameter including the period interval as an example, the terminal device determines that the period interval of the target service is 1.2 ms based on the first information, and the terminal device may determine that the requested period interval is 1 ms among multiple optional values of the period interval, and carry the period interval in the first request.

Alternatively, the configuration parameter information requested by the terminal device includes an absolute value of the configuration parameter requested by the terminal device or an incremental value of the configuration parameter relative to the current configuration. For example, if the period interval of the resource requested by the terminal device is 1 ms and the period interval of the resource in the current configuration is 0.9 ms, the terminal device may carry an increment value of 0.1 ms in the first request.

Exemplarily, the configuration parameter may include at least one of a resource starting time, a period interval, or a data amount.

Alternatively, on the basis of the manner 4 or the manner 5, before the network device sends the first resource configuration information to the terminal device, the method for resource configuration further includes the following operation. The network device sends the second resource configuration information to the terminal device. The second resource configuration information is used to indicate at least one candidate configuration and/or optional value(s) of configuration parameter information requested by the terminal device.

Accordingly, before the terminal device receives the first resource configuration information from the network device, or before the terminal device determines the first request, the method for resource configuration may further include the following operation. The terminal device receives the second resource configuration information from the network device. The second resource configuration information is used to indicate at least one candidate configuration and/or optional value(s) of configuration parameter information requested by the terminal device.

Manner 6: In a case that the prediction information obtained by the terminal device based on the first model includes information such as a starting time and a duration of the target service, the terminal device may further carry information, such as starting time(s) of the resource(s), the number of the resource(s), and time length(s) of the resource(s), in the first request.

It should be understood that the implementation manner of the first request is not limited to the above examples, and specifically, one or more types of information may be set in the request information according to different application scenarios, system agreements, protocol agreements, or actual requirements, which will not be listed herein.

In some embodiments, the method for resource configuration further includes at least one of: in a case that the first condition is satisfied, the terminal device sends the first reporting information to the network device; the terminal device periodically sends the first reporting information to the network device; or the terminal device sends the first reporting information to the network device based on the second request from the network device.

Accordingly, for the network device, the method for resource configuration further includes at least one of: the network device receives the first reporting information sent by the terminal device in a case that the first condition is satisfied; the network device periodically receives the first reporting information; or the network device sends the second request to the terminal device, the second request being used to instruct the terminal device to send the first reporting information.

That is, it may be set that the sending of the first report information is triggered in a case that the first condition is satisfied, the sending of the first report information is periodically triggered, or the sending of the first report information is triggered based on a request of the network device, or the triggering of the first report information may be triggered by simultaneously using any two or three of the above manners. For example, sending of the first reporting information is triggered in the case that the first condition is satisfied, and the sending of the first reporting information is also triggered when the second request from the network device is received. It should be understood that those skilled in the art may freely combine the above manners and, therefore, there combinations are not exhaustive herein.

In some embodiments, the first condition includes at least one of the following conditions A.

Condition A: The transmission information of the target service changes in the first time window. The first time window includes N time units, and N is an integer greater than or equal to 2.

Alternatively, the first time window may be a time window having a time length of N time units after the first time in the above embodiment. Alternatively, in an embodiment in which the prediction information is determined by using the first model, the first time window may be a maximum time window that may be predicted by the first model, that is, the N time units may be a maximum time range that may be predicted by the first model.

Condition B: The transmission information of the target service changes in T time units in the first time window. T is an integer less than N.

Exemplarily, the T time units may be the first T time units in the first time window. For example, in a case that the terminal device predicts that the transmission information of the target service changes in the first T time units in the first time window, the terminal device may send the first report to the network device. The first report includes probability information that the transmission information changes in the complete first time window, time information, or the like. Since the prediction accuracy of the model for the time unit with a short distance is higher than that for the time unit with a long distance, setting the condition B can reduce the number of error reports and reduce the transmission overhead.

Condition C: A probability that the transmission information of the target service changes in the first time window is greater than or equal to the first threshold.

Alternatively, the first threshold may be a preset probability threshold, may be configured by the network device, may be pre-configured or agreed by a protocol.

Condition D: A probability that the transmission information of the target service changes in the T time units is greater than or equal to the second threshold.

Alternatively, the second threshold may be a preset probability threshold, may be configured by the network device, may be pre-configured or agreed by a protocol. Alternatively, the second threshold may be the same as the first threshold or may be different from the first threshold value.

Condition E: A change of a data amount of the target service is greater than or equal to the third threshold.

Alternatively, the third threshold is a preset change amount threshold of data amount, and may be configured by the network device, or may be pre-configured or agreed by a protocol.

Alternatively, the condition E may specifically be that the data amount of the target service is greater than or equal to the third threshold in the first time window or in T time units in the first time window.

Condition F: The data amount of the target service becomes 0.

That is, the terminal device may send the first reporting information to the network device in a case that it is determined or predicted that the data amount of the target service is stopped.

Alternatively, the condition F may specifically be that it is predicted that the data amount of the target service continuously becomes 0 in the first time window, or it is predicted that the duration for which the data amount of the target service continues to be 0 in the first time window is not less than a preset duration. Here, the preset duration is, for example, T time units.

Condition G: The data amount of the target service is less than or equal to the fourth threshold.

Alternatively, the fourth threshold is a preset data amount threshold, which may be configured by the network device, or may be pre-configured or agreed by a protocol.

Alternatively, the condition G may specifically be that it is predicted that data amount of the target service continues to be less than or equal to the fourth threshold value in the first time window, or it is predicted that the duration for which the data amount of the target service continues to be less than or equal to the fourth threshold in the first time window is not less than a preset duration. Here, the preset duration is, for example, T time units.

Condition H: A change of a period of the target service is greater than or equal to the fifth threshold.

Alternatively, the change of the period may include a change amount of period interval or period size. Alternatively, the fifth threshold is a preset change amount threshold of the period, and may be configured by the network device, or may be pre-configured or agreed by a protocol.

Condition I: A pre-configured resource matching the period of the target service does not exist in a current configuration.

For example, in a case that it is predicted that the period of the target service changes, if a pre-configured resource matching the predicted period exists in the current configuration, the terminal device may select the pre-configured resource to transmit data of the target service. If the pre-configured resource matching the period of the target service does not exist in the current configuration, the terminal device may send the first reporting information, so that the network device configures other resources for transmitting data of the target service.

Condition J: A deactivated pre-configured resource matching the period of the target service exists in the current configuration.

For example, in a case that it is predicted that the period of the target service changes, if an activated pre-configured resource matching the period of the target service exists in the current configuration, the terminal device may directly use the activated pre-configured resource to transmit data of the target service. If a deactivated pre-configured resource matching the period of the target service exists in the current configuration, the terminal device may send the first reporting information, so that the network device activates the pre-configured resource.

Condition K: The target service is a predetermined service, and the predetermined service is determined based on a priority or service attribute.

For example, the network configures the first service list for the terminal. If the target service belongs to the service in the first service list, when the first model outputs prediction information for the target service, the sending of the first reporting information is triggered. Alternatively, if the target service belongs to the service in the first list and at least one of the above conditions A-J is satisfied, the sending of the first reporting information is triggered. For example, if the target service has periodicity but is not sensitive to delay, and if a pre-configured resource currently exists, but the period of the pre-configured resource does not match the period of the target service (for example, the period interval of the pre-configured resource is greater than the period interval of the target service), the terminal device may choose not to report/request, but transmit the data of the target service based on the current pre-configured resource.

Exemplarily, the first service list may include at least one of a PDU session ID list, a QoS flow ID list, a DRB ID list, an LCH ID list, an LCG ID list, a 5QI list, or an IP flow list.

It should be noted that in some embodiments, when the first condition includes two or more of the above conditions A-K, it may be considered that the first condition is satisfied when the two or more of the above conditions are satisfied simultaneously. For example, when the first condition includes the condition A and the condition K, the terminal device sends the first reporting information in a case that the transmission information of the target service changes in the first time window and the target service is a predetermined service. In another embodiment, when the first condition includes two or more of the above conditions A-K, it may be considered that the first condition is satisfied when any one of the above conditions is satisfied. For example, when the first condition includes the condition G and the condition H, the terminal device sends the first reporting information when the data amount of the target service is less than or equal to the fourth threshold, the terminal device also sends the first reporting information when the change of the period of the target service is greater than or equal to the fifth threshold.

It should be understood that in practical applications, the implementation manner of the first condition is not limited to the combination manner of above example conditions, and may be specifically implemented according to different application scenarios, system agreements, protocol agreements, or actual requirements, which will not be listed herein.

In a scenario in which the terminal device periodically sends the first reporting information, the terminal device may perform periodic sending based on the third request of the network device, that is, the sending of the first reporting information is triggered half-periodically. Specifically, in some embodiments, the operation that the terminal device periodically sends the first reporting information to the network device includes that when the third request sent by the network device is received, the terminal device periodically sends the first reporting information. Accordingly, the operation that the network device periodically receives the first reporting information includes that after sending the third request to the terminal device, the network device periodically receives the first reporting information. In this way, the flexibility of reporting can be increased, frequent sending can be avoided, and the waste of air interface resources can be reduced.

In a scenario in which the terminal device triggers the sending of the first reporting information based on the second request of the network device, the request of the network device may be sent in a case that the terminal device reports that the first information is obtained. Specifically, in some embodiments, before the terminal device sends the first reporting information to the network device based on the second request from the network device, the method for resource configuration further includes that the terminal device sends the second reporting information to the network device. The second reporting information is used to report that the terminal device obtains the first information, so as to trigger the network device to send the second request. Accordingly, before the network device sends the second request to the terminal device, the method for resource configuration further includes that the network device receives the second reporting information sent by the terminal device. The second reporting information is used to report that the terminal device obtains the first information, so as to trigger the network device to send the second request.

In some embodiments, the first reporting information may be carried by an RRC message or a Medium Access Control Control Element (MAC CE).

In some embodiments, the first reporting information further includes the first indication information, and the first indication information is used to indicate that the first reporting information is related to the prediction information. For example, the first reporting information includes the first report, which is similar to the content of a BSR report and includes information such as a data amount and a period of a certain service. In this case, the first reporting information may further include the first indication information for indicating that the first report in the first reporting information is obtained by predicting, thereby providing a reference for the network side and improving the accuracy of resource configuration.

In some embodiments, the first resource configuration information includes at least one of: configuration parameter(s) of resource(s); the state of resource(s); a duration of the state of resource(s); whether to accept the first request sent by the terminal device; or fault-tolerant configuration of resource(s).

In one embodiment, the first resource configuration information is used to indicate resource(s). Exemplarily, the first resource configuration information may include all or part of configuration parameters in the complete resource configuration, such as starting time, period interval, the number, or the like of the resource. It should be noted that the first resource configuration information may indicate configured resource(s) or recovered resource(s). In other words, the configuration parameter(s) of the resource(s) may include one or more parameters such as starting time, period interval, or the number of the configured resource(s), or may include one or more parameters such as starting time, period interval, or the number of the recovered resource(s).

In one embodiment, the first resource configuration information is related to the state of the resource(s). Exemplarily, the first resource configuration information may include the state of the resource(s), and alternatively, also include a duration of the state of the resource(s). For example, the first resource configuration information may be used to indicate that the state of a certain resource is recovered. For another example, the first resource configuration information may be used to indicate activation or deactivation of a certain pre-configured resource, and indicates a duration of the activation or deactivation. Alternatively, the first resource configuration information may further include the number of activated or deactivated resource(s).

In one embodiment, the first resource configuration information includes whether to accept the first request sent by the terminal device. For example, in a case that the first request includes a requested resource type, the resource type is a dynamically scheduled resource, and the first request includes configuration parameter information, the first resource configuration information may indicate that the first request sent by the terminal device is accepted, that is, the terminal device is configured with a dynamically scheduled resource corresponding to the requested configuration parameter information. The first resource configuration information may indicate that the first request sent by the terminal device is not accepted, and the first resource configuration information includes information such as configuration parameter(s) of resource(s), a state of resource(s), and a duration of the state of resource(s). For another example, in a case that only the requested resource type is included in the first request, and the resource type is a dynamically scheduled resource, the first resource configuration information may include whether to accept the first request sent by the terminal device, and include configuration parameter(s) of the configured dynamically scheduled resource.

In one embodiment, the first resource configuration information includes the fault-tolerant configuration of resource(s).

Alternatively, the fault-tolerant configuration of resource(s) may include a fault-tolerant number and/or a fault-tolerant duration of resource(s).

Exemplarily, in a case that the first information includes prediction information output by the first model, and the first resource configuration information is used to configure or activate the resource(s), the fault-tolerant configuration of the resource(s) in the first resource configuration information is used to indicate that if there is no data transmission of the target service in the second time window corresponding to the fault-tolerant configuration, the resource is recovered, released, or deactivated.

Exemplarily, in a case that the first information includes prediction information output by the first model, and the first resource configuration information is used to recover or deactivate the resource, the fault-tolerant configuration of resource(s) in the first resource configuration information is used to indicate that the resource is temporarily not recovered or deactivated in the second time window corresponding to the fault-tolerant configuration. If data transmission of the target service occurs in the second time window, the terminal device may ignore the recovery or deactivation indication in the first resource configuration information. If data transmission of the target service does not occur in the second time window, the terminal device may confirm the recovery or deactivation of the resource according to the first resource configuration information.

Alternatively, in the above example, the number of times the erroneous configuration occurs may be counted in the second time window corresponding to the fault-tolerant configuration, and if a specified number of erroneous configurations occur within a certain period of time, the first resource configuration information may be considered to be erroneous.

It should be noted that the first resource configuration information may include other information or a combination of information, and specifically, one or more types of information may be set in the request information according to different application scenarios, system agreements, protocol agreements, or actual requirements, which will not be listed here.

In some embodiments, the first resource configuration information is carried by an RRC message, a MAC CE message, or DCI.

In some embodiments, the method for resource configuration may further include that the terminal device sends the third reporting information to the network device. The third reporting information is used for the network device to determine whether to provide a fault-tolerant configuration. Accordingly, on the network side, the method for resource configuration may further include that the network device receives the third reporting information sent by the terminal device. The third reporting information is used for the network device to determine whether to provide a fault-tolerant configuration.

Exemplarily, the third reporting information may include at least one of: measurement information of a downlink reference signal; or whether the measurement information is less than or equal to the sixth threshold. Alternatively, the sixth threshold may be a preset Reference Signal Receiving Power (RSRP) threshold.

For example, the terminal device may carry the third reporting information in the first reporting information to report the wireless link quality for the terminal device. If the current wireless link quality for the terminal is poor, the network device may not provide a fault-tolerant configuration to the terminal device, so as to prevent the inability to distinguish whether it is that there is no data transmission in the time window corresponding to the fault-tolerant configuration or that data cannot be transmitted to the opposite end due to poor channel quality.

In order to facilitate understanding of the technology of the embodiments of the present disclosure, the implementation process of some embodiments of the present disclosure will be clearly described below according to the timing sequence. It should be understood that the following description is merely illustrative and does not limit the scope of protection of the present disclosure. Specifically, the method for resource configuration includes the following processes.
1. When the first model is deployed on the UE side, the UE sends the first report and/or the first request to the network based on an output result of the first model and/or a current resource configuration. The current resource includes a CG resource for uplink transmission, and/or a SPS resource for downlink transmission, and/or a dynamically scheduled uplink/downlink resource.

The UE may trigger the sending of the first report and/or the first request to the network when at least one of the following conditions (1)-(11) is satisfied.
(1) The transmission information of the target service changes. For example, based on the output of the first model, the transmission information of the target service will change within the future N time units, and the N time units here may be the maximum time range that the first model can predict.
(2) In the future T time units, the transmission information of the target service changes, and T < N.
(3) In the future T/N time units, the probability that the transmission information of the target service changes in at least one time unit is greater than or equal to the preset threshold. The preset threshold may be the first threshold or the second threshold in the above embodiments.
(4) In the future T/N time units, the transmission information of the target service will change and the probability of the change is greater than or equal to the preset threshold. The preset threshold may be the first threshold or the second threshold in the above embodiments.
(5) The change of the data amount of the target service is greater than or equal to the third threshold. Alternatively, within T/N time units, the change of the data amount of the target service is greater than or equal to the third threshold.
(6) The data amount of the target service is greater than or equal to the fourth threshold. In T/N time units, the data amount of the target service is greater than or equal to the fourth threshold.
(7) The data amount of the target service becomes 0 or less than/equal to the fourth threshold. Alternatively, the duration for which the data amount of the target service continues to be 0 or less than/equal to the fourth threshold is not less than a preset duration, for example, the preset duration is T time units.
(8) The change of the period of the target service is greater than or equal to the fifth threshold, for example, a period interval.
(9) The target service has periodicity, but a pre-configured resource matching the target service does not exist in the current configuration.
(10) The target service has periodicity, and a pre-configured resource matching the target service exists, but the pre-configured resource is in a deactivated state.
(11) The target service is a service having a specific priority/attribute. For example, the network configures the first service list for the terminal. If the target service belongs to the first service list, when the model outputs the prediction result for the target service, the sending of the first report is triggered. Alternatively, when the target service belongs to the first service list and satisfies at least one of the above conditions (1)-(10), the reporting is triggered. For example, if the target service has periodicity but is not sensitive to delay, and if a pre-configured resource currently exists, but the period of the pre-configured resource does not match the period of the target service (for example, the period interval of the pre-configured resource is greater than the period interval of the target service), the UE may also choose not to report/request, but transmit the data of the target service based on the current pre-configured resource.

In addition to the above event-triggered reporting manner, the UE may periodically send the first report to the network, or send the first report half- periodically, or send the first report based on the triggering of the network. Alternatively, the UE informs the network side that an available first report exists, and then reports it based on the request of the network.

In this operation, alternatively, the first report and/or the first request is carried through an RRC message or a MAC CE.

Alternatively, the first report includes prediction information for at least one target service, and the prediction information for each target service includes the following (1)-(7).
(1) Type of the target service, for example, voice service, short message service, video service, delay-sensitive service, etc.
(2) The target service being an uplink service or a downlink service.
(3) Time information at which transmission information of the target service changes and/or probability information that transmission information of the target service changes. The change of the transmission information includes: arrival of new data, change of data amount, change of period, etc.

The specific manner includes the following a-c.
a. On the basis of the first time, in the future N time units (such as N slots), whether the new service arrives in each time unit, and/or the arrival probability.
b. On the basis of the first time, a time interval between the arrival time of the new service and the first time, and/or an arrival probability. Alternatively, only the prediction result having the greatest arrival probability may be reported, or M prediction results with the greatest arrival probability may be reported.
c. On the basis of the first time, in the future N time units, whether the transmission information of the target service changes, and/or the probability that the change occurs.

In the above specific manner, the arrival probability may be indicated through an index value corresponding to a probability range, for example, a probability within [0%, 10%] corresponds to an index value of 0, a probability within [11%, 20%] corresponds to an index value of 1, and so on.

Alternatively, the time unit may include a symbol, a slot, a subframe, a radio frame, a millisecond, a second, a minute, an hour, a day, etc.

Alternatively, the first time is, for example, an operation time of the model, or the first time is a time at which the model outputs the prediction result, or the first time is output by the first model.
(4) Whether the data of the target service has periodicity, and/or, period interval.
(5) Data amount of the target service.
(6) Duration of the target service.
(7) Identifier information of the target service. The identifier information of the target service includes a PDU session ID/IP flow/5QI/QoS flow ID/DRB ID/LCH ID/LCG ID, etc.
(8) Priority level of the target service. Alternatively, the correspondence relationship between the service type and the priority level is configured in advance by the network or predefined by the protocol.

Alternatively, the first request includes at least one of following (1)-(7).
(1) Resource type requested to be configured/updated/activated/deactivated, which includes CG resource/dynamically scheduled resource/SPS resource.
(2) Index of pre-configured resource requested to be updated/recovered/activated/deactivated, which includes index of CG resource/SPS resource.
(3) Requesting activation/deactivation/update/recovery for the pre-configured resource.
(4) Candidate configuration requested for use, and/or, index of candidate configuration. For example, the network provides a terminal with multiple sets of candidate configurations, and the multiple sets of candidate configurations may be multiple sets of pre-configured resources, or partial configuration information in one set of pre-configured resources, such as starting time of resource, period interval, data amount, etc. Before the UE sends the first request to the network, the UE receives the second resource configuration information sent by the network. The second resource configuration information includes candidate configuration(s) that the UE can request. Taking the period interval of the CG resource as an example, the second resource configuration information includes at least one candidate period interval value, and each value corresponds to an index value, and the UE selects a configuration closest to the prediction result from the candidate configuration(s) based on the prediction result, and the index of the corresponding candidate configuration is included in the first request.
(5) Requested/suggested resource configuration parameter information. For example, if the UE determines that the period of the target service is 1.2 ms based on the service prediction result, the period of the pre-configured resource that the UE may suggest is 1 ms. The requested/suggested parameter information may be an absolute value and/or an incremental value based on the current configuration. Alternatively, before sending the first request, the UE receives the first configuration sent by the network side, and the first configuration includes parameter value(s) or increment value(s) that the network allows the UE to request/suggest.
(6) Resource information that may be recovered, which includes starting time, and/or the number of resource(s) that may be recovered, and/or a time that resource(s) may be recovered.
(7) All or part of information in the first report.

Alternatively, the first report and/or the first request may further include the first indication information. The first indication information is used to indicate whether the reported content is prediction information, and/or whether the reported content is determined based on the prediction information.
2. In a case that the first model is deployed on the network side, the UE does not need to report the first report or the first request, and the network may acquire information in the first report based on the first model operated on the network side.
3. The network side sends the first resource configuration information to the UE according to the information in the first reporting and/or the first request. The UE receives the first resource configuration information, and determines uplink/downlink transmission resource(s) and/or the state of the resource(s) based on the first resource configuration information.

Alternatively, the first resource configuration includes at least one of following (1)-(7).
(1) Resource configuration(s). The granularity of resource configuration may include complete resource configuration information or partial configuration information in the resource configuration, for example, resource starting time, period interval, data amount, etc.
(2) State of resource(s), which includes activation/deactivation.
(3) The activation/deactivation duration, or the number of activated/deactivated resources.
(4) Whether to accept the first request sent by the UE.
(5) Fault-tolerance time/the number of resource(s).
(6) The number or time of recovered resource(s).
(7) The starting time(s) of the covered resource(s).

Alternatively, the first resource configuration information may be a resource configuration for uplink data transmission or may be a resource configuration for downlink data transmission.

Alternatively, the first resource configuration information may be carried by a RRC, a MAC CE, or DCI.

Alternatively, before receiving the first resource configuration, the UE may send the current measurement result of the downlink reference signal to the network, or whether the measurement result value of the downlink reference signal is lower than the first RSRP threshold. The purpose of reporting this information is to help the network determine whether to provide a fault-tolerant configuration. For example, if the current wireless link quality of the UE is poor, the network does not provide the fault-tolerant configuration to the UE, so as to prevent the UE/network from being unable to distinguish whether it is that there is currently no data transmission or that data cannot be transmitted to the opposite end due to poor channel quality.

Several specific application examples are provided below for ease of understanding.

### Application Example 1

The network configures the first CG resource for the UE, the first CG resource includes at least one period configuration, and each period configuration corresponds to a determined index value (for example, period = 2 symbols corresponds to index 0, period = 7 symbols corresponds to index 1, and so on). It is assumed that the current period configuration of the first CG resource is a value corresponding to the index 0, and the network determines that the period configuration needs to be updated to a value corresponding to the index 1 based on the output of the first model or the first report or the first request in order to adapt to the target service to be arrived, the network carries the target period index, for example, the index 1, in the first resource configuration. According to the first resource configuration, the UE changes the period of the first CG resource from a value corresponding to the index 0 to a value corresponding to the index 1.

### Application Example 2

If the first model is deployed on the UE side, the UE may request the network to adjust a part of current parameters of a pre-configured resource according to the output result of the model and the current resource configuration. For example, the first request may include an adjustment value suggested by the UE, such as adjusting the period of the first CG resource from 2 symbols to 7 symbols. After receiving the first request, the network may choose to accept the adjustment value suggested by the UE in the first request without including the parameter configuration to be updated in the first resource configuration.

### Application Example 3

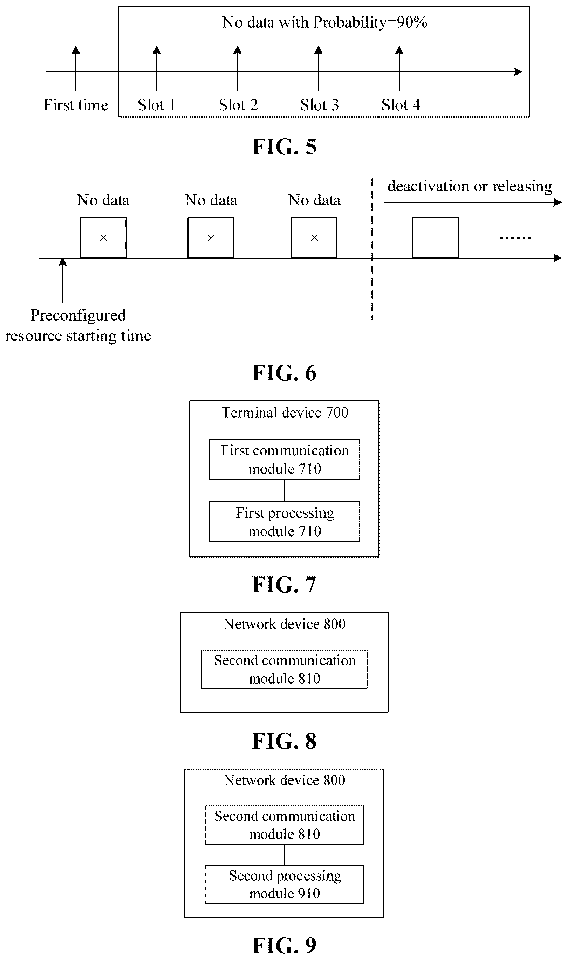

According to the output of the first model/the first report/the first request, the network may recover a part of pre-configured resources that are temporarily not needed to be used by the UE. FIG. 5 is a schematic diagram of application example 3 in the embodiment of the present disclosure. For example, based on the prediction result, there is a high probability that there will be no more data transmission from the third slot after the first time, and the duration of no data transmission is 10 CG periods. In order to improve resource utilization, the network may choose to recover 10 pre-configured resource transmission opportunities starting from the third slot. Therefore, the first resource configuration information may indicate recovered pre-configured resource information, which includes a recovery starting time, the number of recovered resources, or a duration for resource recovery. The UE does not perform transmission/reception of data for the recovered pre-configured resource.

During the resource recovery, if the terminal/network determines that the recovered pre-configured resource(s) needs to be used based on the actual arrived data situation/the prediction result of the first model, the network may return the right of using the resource(s) to the terminal by sending new first resource configuration information. Alternatively, the terminal may send the first request to the network to request the network to return the recovered resource(s).

### Application Example 4

The network configures/activates/updates/recovers the pre-configured resource(s) based on the service information predicted by the first model, which may cause the resource configuration to be inconsistent with the actual transmission situation. For example, the first model predicts that the terminal will have new data to be transmitted starting from the third slot (which is called the second time) after the first time, and the network configures the corresponding transmission resource(s) for the terminal in advance based on this information, but when the second time arrives, the expected data to be transmitted does not arrive, which will lead to waste of the pre-configured resource(s). Therefore, the network may carry the fault-tolerance time/the number of fault-tolerance resource(s) in the first resource configuration. FIG. 6 is a schematic diagram of an application example 4 in the embodiment of the present disclosure. As illustrated in FIG. 6, for example, the fault-tolerant number of resource(s) configured by the network is 3. If there is no data transmission at three consecutive transmission occasions from the starting time of the resource(s), the UE and the network consider that the pre-configured resource(s) is deactivated or released.

For another example, in the resource recovery scenario, if the fault-tolerant number of resource(s) configured by the network is 3, the UE can still perform data transmission/reception at three consecutive transmission occasions after the recovery starting time. If the UE has data transmission/reception requirements at any transmission occasion, the UE ignores the recovery indication. Otherwise, the UE does not perform data transmission/reception from the fourth transmission occasion.

Alternatively, it may be considered that the original configuration is wrong based on the statistics of the occurrence of erroneous configuration in the first time window, for example, an erroneous network configuration occurs three times in 1 s.

As can be seen, the embodiments of the present disclosure provides a method for resource configuration based on service prediction, which can use an AI model to predict the arrival of services of the terminal, and use the prediction information to assist the network in optimizing resource scheduling efficiency and improving resource utilization.

FIG. 7 is a schematic block diagram of a terminal device 700 according to an embodiment of the present disclosure. The terminal device 700 may include the first communication module 710 and the first processing module 720.

The first communication module 710 is configured to receive the first resource configuration information from a network device. The first resource configuration information is related to the first information of a target service.

The first processing module 720 is configured to determine, based on the first resource configuration information, resource(s) for transmitting data and/or a state of the resource(s).

In one embodiment, the first information includes prediction information determined based on the first model.

In one embodiment, the first information is related to whether transmission information of the target service changes.

In one embodiment, a change of the transmission information includes at least one of: an arrival of the target service; a change of a data amount of the target service; or a change of a period of the target service.

In one embodiment, the first information includes at least one of: a type of the target service; the target service being an uplink service or a downlink service; whether transmission information of the target service changes; time information at which the transmission information of the target service changes; probability information that the transmission information of the target service changes; period information of the target service; a data amount of the target service; a duration of the target service; or identifier information of the target service.

In one embodiment, whether the transmission information of the target service changes includes at least one of: whether the transmission information of the target service changes on each time unit in the first time window after the first time; or whether the transmission information of the target service changes in the first time window.

In one embodiment, the time information at which the transmission information of the target service changes includes: an interval between a time at which the transmission information of the target service changes and the first time.

In one embodiment, the probability information that the transmission information of the target service changes includes at least one of the following: probability information that the transmission information of the target service changes on each time unit in the first time window after the first time; probability information that the transmission information of the target service changes in the first time window; or probability information that the transmission information of the target service changes in each of the M time units. The M time units are determined based on the probability that the transmission information of the target service changes in each time unit in the first time window, and M is an integer equal to or greater than 1.

In one embodiment, the probability information includes a probability that the transmission information changes or an index value of a probability interval corresponding to the probability.

In one embodiment, the time unit is a symbol, a slot, a subframe, a radio frame, a millisecond, a second, a minute, an hour, or a day.

In one embodiment, the first information further includes the first time.

In one embodiment, the first resource configuration information is determined based on the first information and/or the sent first reporting information, related to the first information.

In one embodiment, the first reporting information includes at least one of: the first report including the first information; or the first request including request information for the resource. The first request is determined based on the first information.

In one embodiment, the first report further includes at least one of: a type of the target service; the target service being an uplink service or a downlink service; the first time used for determining the first time window in which transmission information of the target service changes; identifier information of the target service; or a priority of the target service.

In one embodiment, the first time is an operation time of a first model used to determine the first information, a time at which the first model determines the first information, or a time predicted by the first model.

In one embodiment, the request information includes at least one of: a requested resource type; index(es) of requested pre-configured resource(s); a requested processing method for resource(s); index(es) of requested candidate configuration(s) in at least one candidate configuration; requested configuration parameter information; starting time(s) of requested resource(s); the number of requested resource(s); or time length(s) of requested resource(s).

In one embodiment, the processing method includes configuring, updating, recovering, activating, or deactivating.

In one implementation, the first communication module 710 is further configured to receive the second resource configuration information from the network device. The second resource configuration information is used to indicate the at least one candidate configuration and/or optional value(s) of requested configuration parameter information.

In one embodiment, the requested configuration parameter information includes an absolute value of the requested configuration parameter or an incremental value of the configuration parameter relative to a current configuration.

In one embodiment, the first communication module 710 is further configured to perform at least one of: sending the first reporting information to the network device in a case that the first condition is satisfied; periodically sending the first reporting information to the network device; or sending the first reporting information to the network device based on the second request from the network device.

In one embodiment, the first condition includes at least one of: transmission information of the target service changes in the first time window, the first time window including N time units, and N being an integer greater than or equal to 2; the transmission information of the target service changes in T time units in the first time window, T being an integer less than N; a probability that the transmission information of the target service changes in the first time window is greater than or equal to the first threshold; a probability that the transmission information of the target service changes in the T time units is greater than or equal to the second threshold; a change of a data amount of the target service is greater than or equal to the third threshold; the data amount of the target service becomes 0; the data amount of the target service is less than or equal to the fourth threshold; a change of a period of the target service is greater than or equal to the fifth threshold; a pre-configured resource matching the period of the target service does not exist in a current configuration; a deactivated pre-configured resource matching the period of the target service exists in the current configuration; or the target service is a predetermined service, the predetermined service being determined based on a priority or service attribute.

In one implementation, the first communication module 710 is further configured to: in a case that the third request sent by the network device is received, periodically sent the first reporting information.

In one implementation, the first communication module 710 is further configured to send the second reporting information to the network device. The second reporting information is used to report that the first information is obtained, so as to trigger the network device to send the second request.

In one embodiment, the first reporting information is carried by a RRC message or a MAC CE.

In one embodiment, the first reporting information further includes the first indication information, and the first indication information is used to indicate that the first reporting information is related to prediction information.

In one embodiment, the first resource configuration information includes at least one of: configuration parameter(s) of resource(s); the state of resource(s); a duration of the state of resource(s); whether to accept a sent first request; or a fault-tolerant configuration of resource(s).

In one embodiment, the fault-tolerant configuration of resource(s) includes a fault-tolerant number and/or a fault-tolerant duration of resource(s).

In one embodiment, the resource(s) includes an uplink resource and/or a downlink resource.

In one embodiment, the first resource configuration information is carried by an RRC message, a MAC CE message, or DCI.

In one implementation, the first communication module 710 is further configured to send the third reporting information to the network device. The third reporting information is used for the network device to determine whether to provide a fault-tolerant configuration.

In one embodiment, the third reporting information includes at least one of the following: measurement information of a downlink reference signal; or whether the measurement information is less than or equal to the sixth threshold.

The terminal device 700 according to the embodiment of the present disclosure can implement the corresponding function of the terminal device in the above method embodiments. For the processes, functions, implementation manners, and beneficial effects corresponding to respective modules (sub-modules, units, components, etc.) in the terminal device 700, the reference is made to the corresponding description in the above method embodiment, which will not be repeatedly described herein. The functions described with respect to respective modules (sub-modules, units, components, etc.) in the terminal device 700 of the embodiment in the present disclosure may be implemented by different modules (sub-modules, units, components, etc.), or may be implemented by the same module (sub-module, unit, component, etc.).

FIG. 8 is a schematic block diagram of a network device 800 according to an embodiment of the present disclosure. The network device 800 may include the second communication module 810.

The second communication module 810 is configured to send the first resource configuration information to a terminal device. The first resource configuration information is related to the first information of a target service, and the first resource configuration information is used for the terminal device to determine resource(s) for transmitting data and/or a state of the resource(s).

In one embodiment, the first information includes prediction information determined based on the first model.

In one embodiment, the first information is related to whether transmission information of the target service changes.

In one embodiment, a change of the transmission information includes at least one of: an arrival of the target service; a change of a data amount of the target service; or a change of a period of the target service.

In one embodiment, the first information includes at least one of: a type of the target service; the target service being an uplink service or a downlink service; whether transmission information of the target service changes; time information at which the transmission information of the target service changes; probability information that the transmission information of the target service changes; period information of the target service; a data amount of the target service; a duration of the target service; or identifier information of the target service.

In one embodiment, whether the transmission information of the target service changes includes at least one of: whether the transmission information of the target service changes on each time unit in the first time window after the first time; or whether the transmission information of the target service changes in the first time window.

In one embodiment, the time information at which the transmission information of the target service changes includes: an interval between a time at which the transmission information of the target service changes and the first time.

In one embodiment, the probability information that the transmission information of the target service changes includes at least one of the following: probability information that the transmission information of the target service changes on each time unit in the first time window after the first time; probability information that the transmission information of the target service changes in the first time window; or probability information that the transmission information of the target service changes in each of the M time units. The M time units are determined based on the probability that the transmission information of the target service changes in each time unit in the first time window, and M is an integer equal to or greater than 1.

In one embodiment, the probability information includes a probability that the transmission information changes or an index value of a probability interval corresponding to the probability.

In one embodiment, the time unit is a symbol, a slot, a subframe, a radio frame, a millisecond, a second, a minute, an hour, or a day.

In one embodiment, the prediction information further includes the first time.

In one embodiment, as illustrated in FIG. 9, the network device further includes the second processing module 910.

The second processing module 910 is configured to determine the first resource configuration information based on the first information and/or the first reporting information, related to the first information, sent by the terminal device.

In one embodiment, the first reporting information includes at least one of: the first report including the first information; or the first request including request information of the terminal device for the resource. The first request is determined based on the first information.

In one embodiment, the first report further includes at least one of: a type of the target service; the target service being an uplink service or a downlink service; the first time used for determining the first time window in which transmission information of the target service changes; identifier information of the target service; or a priority of the target service.

In one embodiment, the first time is an operation time of a first model used to determine the first information, a time at which the first model determines the first information, or a time predicted by the first model.

In one embodiment, the request information includes at least one of: a resource type requested by the terminal device; index(es) of pre-configured resource(s) requested by the terminal device; a processing method for resource(s) requested by the terminal device; index(es) of candidate configuration(s) requested by the terminal device in at least one candidate configuration; a configuration parameter information requested by the terminal device; starting time of resource(s) requested by the terminal device; the number of resource(s) requested by the terminal device; time length(s) of resource(s) requested by the terminal device.

In one embodiment, the processing method includes configuring, updating, recovering, activating, or deactivating.

In one implementation, the second communication module 810 is further configured to send the second resource configuration information to the terminal device. The second resource configuration information is used to indicate the at least one candidate configuration and/or optional value(s) of configuration parameter information requested by the terminal device.

In one embodiment, the configuration parameter information requested by the terminal device includes an absolute value of the configuration parameter requested by the terminal device or an incremental value of the configuration parameter relative to a current configuration.

In one embodiment, the network device is further configured to perform at least one of: receiving the first reporting information sent by the terminal device in a case that the first condition is satisfied; periodically receiving the first reporting information; or sending the second request to the terminal device. The second request is used to instruct the terminal device to send the first reporting information.

In one embodiment, the first condition includes at least one of: transmission information of the target service changes in the first time window, the first time window including N time units, and N being an integer greater than or equal to 2; the transmission information of the target service changes in T time units in the first time window, T being an integer less than N; a probability that the transmission information of the target service changes in the first time window is greater than or equal to the first threshold; a probability that the transmission information of the target service changes in the T time units is greater than or equal to the second threshold; a change of a data amount of the target service is greater than or equal to the third threshold; the data amount of the target service becomes 0; the data amount of the target service is less than or equal to the fourth threshold; a change of a period of the target service is greater than or equal to the fifth threshold; a pre-configured resource matching the period of the target service does not exist in a current configuration; a deactivated pre-configured resource matching the period of the target service exists in the current configuration; or the target service is a predetermined service, the predetermined service being determined based on a priority or service attribute.

In one implementation, the second communication module 810 is further configured to: after sending the third request to the terminal device, periodically receive the first reporting information.

In one implementation, the second communication module 810 is further configured to receive the second reporting information sent by the terminal device. The second reporting information is used to report that the terminal device obtains the first information, so as to trigger sending of the second request.

In one embodiment, the first reporting information is carried by a RRC message or a MAC CE.

In one embodiment, the first reporting information further includes the first indication information, and the first indication information is used to indicate that the first reporting information is related to prediction information.

In one embodiment, the first resource configuration information includes at least one of: configuration parameter(s) of resource; the state of the resource; a duration of the state of the resource; whether to accept the first request sent by the terminal device; or a fault-tolerant configuration of the resource.

In one embodiment, the fault-tolerant configuration of the resource includes a fault-tolerant number and/or a fault-tolerant duration of resource(s).

In one embodiment, the resource(s) includes an uplink resource and/or a downlink resource.

In one embodiment, the first resource configuration information is carried by an RRC message, a MAC CE message, or DCI.

In one implementation, the second communication module 810 is further configured to receive the third reporting information sent by the terminal device. The third reporting information is used to determine whether to provide a fault-tolerant configuration.

In one embodiment, the third reporting information includes at least one of: measurement information of a downlink reference signal; or whether the measurement information is less than or equal to the sixth threshold.

The network device 800 according to the embodiment of the present disclosure can implement the corresponding function of the network device in the above method embodiments. For the processes, functions, implementation manners, and beneficial effects corresponding to respective modules (sub-modules, units, components, etc.) in the network device 800, the reference is made to the corresponding description in the above method embodiment, which will not be repeatedly described herein. The functions described with respect to respective modules (sub-modules, units, components, etc.) in the network device 800 of the embodiment in the present disclosure may be implemented by different modules (sub-modules, units, components, etc.), or may be implemented by the same module (sub-module, unit, component, etc.).

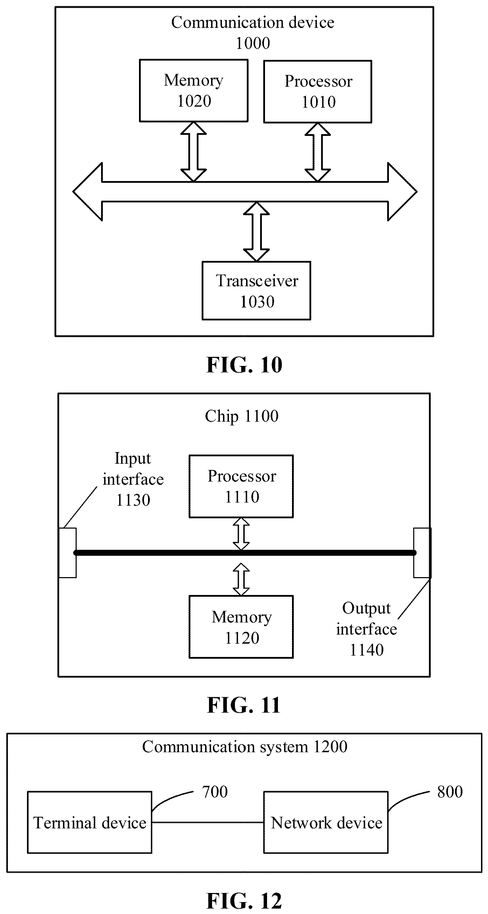

FIG. 10 is a schematic structural diagram of a communication device 1000 according to an embodiment of the present disclosure. The communication device 1000 includes a processor 1010, and the processor 1010 may invoke and execute a computer program from a memory to cause the communication device 1000 to implement the methods in the embodiments of the present disclosure.

In one embodiment, the communication device 1000 may further include a memory 1020. The processor 1010 may invoke and execute a computer program from the memory 1020 to cause the communication device 1000 to implement the method in the embodiment of the present disclosure.

The memory 1020 may be a separate device independent of the processor 1010 or may be integrated in the processor 1010.

In one embodiment, the communication device 1000 may further include a transceiver 1030. The processor 1010 may control the transceiver 1030 to communicate with other devices, in particular, may send information or data to or receive information or data sent by other devices.

Here, the transceiver 1030 may include a transmitter and a receiver. The transceiver 1030 may further include one or more antennas.

In one embodiment, the communication device 1000 may be a terminal device according to the embodiment of the present disclosure, and the communication device 1000 may implement corresponding processes implemented by the terminal device in respective methods according to the embodiment of the present disclosure, and the description thereof will not be repeated here for the sake of simplicity.

In one embodiment, the communication device 1000 may be a network device according to the embodiment of the present disclosure, and the communication device 1000 may implement corresponding processes implemented by the network device in respective methods according to the embodiment of the present disclosure, and the description thereof will not be repeated here for the sake of simplicity.

FIG. 11 is a schematic structural diagram of a chip 1100 according to an embodiment of the present disclosure. The chip 1100 includes a processor 1110, and the processor 1110 may invoke and execute a computer program from a memory to implement the methods in the embodiments of the present disclosure.

In one embodiment, the chip 1100 may further include a memory 1120. The processor 1110 may invoke and execute a computer program from the memory 1120 to implement the method performed by the terminal device in the embodiments of the present disclosure.

The memory 1120 may be a separate device independent of the processor 1110, or may be integrated in the processor 1110.

In one embodiment, the chip 1100 may further include an input interface 1130. Here, the processor 1110 may control the input interface 1130 to communicate with other devices or chips, and specifically, may acquire information or data sent by other devices or chips.

In one embodiment, the chip 1100 may further include an output interface 1140. The processor 1110 may control the output interface 1140 to communicate with other devices or chips, specifically, may output information or data to other devices or chips.

In one embodiment, the chip may be applied to the terminal device in the embodiments of the present disclosure, and the chip may implement corresponding processes implemented by the terminal device in respective methods of the embodiments of the present disclosure, which will not be repeatedly described here for the sake of simplicity.

In one embodiment, the chip may be applied to the network device in the embodiments of the present disclosure, and the chip may implement corresponding processes implemented by the network device in respective methods of the embodiments of the present disclosure, which will not be repeatedly described here for the sake of simplicity.

It should be understood that the chip mentioned in the embodiments of the present disclosure may also be referred to as a system level chip, a system chip, a chip system, or a system-on-chip.

The processor mentioned above may be a general-purpose processor, a digital signal processor (DSP), a field programmable gate array (FPGA), an application specific integrated circuit (ASIC) or other programmable logic device, a transistor logic device, a discrete hardware component, or the like. The general-purpose processor mentioned above may be a microprocessor or any conventional processor or the like.

The memory mentioned above may be a volatile memory or a non-volatile memory, or may include both volatile and non-volatile memory. The non-volatile memory may be a read-only memory (ROM), a programmable ROM (PROM), an erasable PROM (EPROM), an electrically EPROM (EEPROM), or a flash memory. The volatile memory may be a random access memory (RAM).

It should be understood that the memory described above is illustrative but not limiting, for example, the memory in the embodiments of the present disclosure may also be a static RAM (SRAM), a dynamic RAM (DRAM), a synchronous DRAM (SDRAM), a double data rate SDRAM (DDRAM), an enhanced SDRAM (ESDRAM), a synch link DRAM (SLDRAM), a Direct Rambus RAM (DR RAM), and the like. That is, the memory in the embodiments of the present disclosure is intended to include, but is not limited to, these and any other suitable type of memory.

FIG. 12 is a schematic block diagram of a communication system 1200 according to an embodiment of the present disclosure. The communication system 1200 includes the terminal device 700 and the network device 800.

The terminal device 700 is configured to receive the first resource configuration information from a network device, and determine, based on the first resource configuration information, a resource for transmitting data and/or a state of the resource. The first resource configuration information is related to the first information of a target service.

The network device 800 is configured to send the first resource configuration information to a terminal device. The first resource configuration information is related to the first information of a target service, and the first resource configuration information is used for the terminal device 700 to determine a resource for transmitting data and/or a state of the resource

The above embodiments may be implemented in whole or in part by software, hardware, firmware, or any combination thereof. When implemented using software, they may be implemented in whole or in part in the form of a computer program product. The computer program product includes one or more computer instructions. When the computer program instructions are loaded and executed on a computer, the processes or functions according to embodiments of the present disclosure are generated in whole or in part. The computer may be a general purpose computer, a special purpose computer, a computer network, or other programmable device. The computer instructions may be stored in a computer-readable storage medium or sent from one computer-readable storage medium to another computer-readable storage medium, for example, the computer instructions may be transmitted from one website station, computer, server, or data center by wired (e.g., coaxial cable, optical fiber, Digital Subscriber Line (DSL)) or wireless (e.g., infrared, wireless, microwave, etc.) means to another website station, computer, server, or data center. The computer-readable storage medium may be any available medium accessible by a computer or a data storage device such as a server, a data center, or the like that contains one or more available media integrations. The available medium may be a magnetic medium (e.g., a floppy disk, a hard disk, a magnetic tape), an optical medium (e.g., a DVD), or a semiconductor medium (e.g., a Solid State Disk (SSD)), etc.

It should be understood that in various embodiments of the present disclosure, the sequence numbers of the above processes do not mean the sequence of execution, and the sequence of execution of each process should be determined by its function and internal logic, and should not constitute any limitation on the implementation of the embodiments of the present disclosure.

Those skilled in the art can clearly understand that for convenience and conciseness of the description, the specific working processes of the systems, apparatus, and units described above may refer to the corresponding processes in the aforementioned method embodiments, which will not be repeatedly described herein.

The above is merely a specific embodiment of the present disclosure, but the scope of protection of the present disclosure is not limited thereto. Any person skilled in the art may easily think of changes or substitutions within the technical scope disclosed in the present disclosure, which should be covered within the scope of protection of the present disclosure. Therefore, the scope of protection of the present disclosure should be based on the scope of protection of claims.

## Claims

1. A method for resource configuration, comprising:
receiving, by a terminal device, first resource configuration information from a network device, wherein the first resource configuration information is related to first information of a target service; and
determining, by the terminal device based on the first resource configuration information, resource(s) for transmitting data and/or a state of the resource(s).

2. The method of claim 1, wherein the first information comprises prediction information determined based on a first model.

3. The method of claim 1 or 2, wherein the first information is related to whether transmission information of the target service changes.

4. The method of claim 3, wherein a change of the transmission information comprises at least one of:
an arrival of the target service;
a change of a data amount of the target service; or
a change of a period of the target service.

5. The method of any one of claims 1 to 4, wherein the first information comprises at least one of:
a type of the target service;
the target service being an uplink service or a downlink service;
whether transmission information of the target service changes;
time information at which the transmission information of the target service changes;
probability information that the transmission information of the target service changes;
period information of the target service;
a data amount of the target service;
a duration of the target service; or
identifier information of the target service.

6. The method of claim 5, wherein whether the transmission information of the target service changes comprises at least one of:
whether the transmission information of the target service changes on each time unit in a first time window after a first time; or
whether the transmission information of the target service changes in the first time window.

7. The method of claim 5 or 6, wherein the time information at which the transmission information of the target service changes comprises:
an interval between a time at which the transmission information of the target service changes and a first time.

8. The method of claim 6 or 7, wherein the first information further comprises the first time.

9. The method of any one of claims 1 to 8, wherein the first resource configuration information is determined based on the first information and/or first reporting information, related to the first information, sent by the terminal device.

10. The method of claim 9, wherein the first reporting information comprises at least one of:
a first report comprising the first information; or
a first request comprising request information of the terminal device for the resource(s), wherein the first request is determined based on the first information.

11. The method of claim 10, wherein the first report further comprises at least one of:
a type of the target service;
the target service being an uplink service or a downlink service;
a first time used for determining a first time window in which transmission information of the target service changes;
identifier information of the target service; or
a priority of the target service.

12. The method of claim 11, wherein the first time is an operation time of a first model used to determine the first information, a time at which the first model determines the first information, or a time predicted by the first model.

13. The method of any one of claims 10 to 12, wherein the request information comprises at least one of:
a resource type requested by the terminal device;
index(es) of pre-configured resource(s) requested by the terminal device;
a processing method for resource(s) requested by the terminal device;
index(es) of candidate configuration(s) requested by the terminal device in at least one candidate configuration;
configuration parameter information requested by the terminal device;
starting time(s) of resource(s) requested by the terminal device;
a number of resource(s) requested by the terminal device; or
time length(s) of resource(s) requested by the terminal device.

14. The method of claim 13, wherein the processing method comprises configuring, updating, recovering, activating, or deactivating.

15. The method of claim 13 or 14, wherein before receiving, by the terminal device, the first resource configuration information from the network device, the method further comprises:
receiving, by the terminal device, second resource configuration information from the network device, wherein the second resource configuration information is used to indicate the at least one candidate configuration and/or optional value(s) of configuration parameter information requested by the terminal device.

16. The method of any one of claims 13 to 15, wherein the configuration parameter information requested by the terminal device comprises an absolute value of the configuration parameter requested by the terminal device or an incremental value of the configuration parameter relative to a current configuration.

17. The method of any one of claims 9 to 16, further comprising:
in a case that a first condition is satisfied, sending, by the terminal device, the first reporting information to the network device.

18. The method of claim 17, wherein the first condition comprises at least one of:
transmission information of the target service changes in a first time window, wherein the first time window comprises N time units, and N is an integer greater than or equal to 2;
the transmission information of the target service changes in T time units in the first time window, wherein T is an integer less than N;
a probability that the transmission information of the target service changes in the first time window is greater than or equal to a first threshold;
a probability that the transmission information of the target service changes in the T time units is greater than or equal to a second threshold;
a change of a data amount of the target service is greater than or equal to a third threshold;
the data amount of the target service becomes 0;
the data amount of the target service is less than or equal to a fourth threshold;
a change of a period of the target service is greater than or equal to a fifth threshold;
a pre-configured resource matching the period of the target service does not exist in a current configuration;
a deactivated pre-configured resource matching the period of the target service exists in the current configuration; or
the target service is a predetermined service, wherein the predetermined service is determined based on a priority or service attribute.

19. The method of any one of claims 9 to 18, wherein the first reporting information further comprises first indication information, and the first indication information is used for indicating that the first reporting information is related to prediction information.

20. The method of any one of claims 1 to 19, wherein the first resource configuration information comprises at least one of:
configuration parameter(s) of the resource(s);
the state of the resource(s);
a duration of the state of the resource(s);
whether to accept a first request sent by the terminal device; or
a fault-tolerant configuration of the resource(s).

21. The method of any one of claims 1 to 20, further comprising:
sending, by the terminal device, third reporting information to the network device, wherein the third reporting information is used for the network device to determine whether to provide a fault-tolerant configuration.

22. The method of claim 21, wherein the third reporting information comprises at least one of:
measurement information of a downlink reference signal; or
whether the measurement information is less than or equal to a sixth threshold.

23. A method for resource configuration, comprising:
sending, by a network device, first resource configuration information to a terminal device, wherein the first resource configuration information is related to first information of a target service, and the first resource configuration information is used for the terminal device to determine resource(s) for transmitting data and/or a state of the resource(s).

24. The method of claim 23, wherein the first information comprises prediction information determined based on a first model.

25. The method of claim 23 or 24, wherein the first information is related to whether transmission information of the target service changes.

26. The method of claim 25, wherein a change of the transmission information comprises at least one of:
an arrival of the target service;
a change of a data amount of the target service; or
a change of a period of the target service.

27. The method of any one of claims 23 to 26, wherein the first information comprises at least one of:
a type of the target service;
the target service being an uplink service or a downlink service;
whether transmission information of the target service changes;
time information at which the transmission information of the target service changes;
probability information that the transmission information of the target service changes;
period information of the target service;
a data amount of the target service;
a duration of the target service; or
identifier information of the target service.

28. The method of claim 27, wherein whether the transmission information of the target service changes comprises at least one of:
whether the transmission information of the target service changes on each time unit in a first time window after a first time; or
whether the transmission information of the target service changes in the first time window.

29. The method of claim 27 or 28, wherein the time information at which the transmission information of the target service changes comprises:
an interval between a time at which the transmission information of the target service changes and a first time.

30. The method of claim 28 or 29, wherein the first information further comprises the first time.

31. The method of any one of claims 23 to 30, further comprising:
determining, by the network device, the first resource configuration information based on the first information and/or first reporting information, related to the first information, sent by the terminal device.

32. The method of claim 31, wherein the first reporting information comprises at least one of:
a first report comprising the first information; or
a first request comprising request information of the terminal device for the resource(s), wherein the first request is determined based on the first information.

33. The method of claim 32, wherein the first report further comprises at least one of:
a type of the target service;
the target service being an uplink service or a downlink service;
a first time used for determining a first time window in which transmission information of the target service changes;
identifier information of the target service; or
a priority of the target service.

34. The method of claim 33, wherein the first time is an operation time of a first model used to determine the first information, a time at which the first model determines the first information, or a time predicted by the first model.

35. The method of any one of claims 32 to 34, wherein the request information comprises at least one of:
a resource type requested by the terminal device;
index(es) of pre-configured resource(s) requested by the terminal device;
a processing method for resource(s) requested by the terminal device;
index(es) of candidate configuration(s) requested by the terminal device in at least one candidate configuration;
configuration parameter information requested by the terminal device;
starting time(s) of resource(s) requested by the terminal device;
a number of resource(s) requested by the terminal device; or
time length(s) of resource(s) requested by the terminal device.

36. The method of claim 35, wherein the processing method comprises configuring, updating, recovering, activating, or deactivating.

37. The method of claim 35 or 36, wherein before sending, by the network device, the first resource configuration information to the terminal device, the method further comprises:
sending, by the network device, second resource configuration information to the terminal device, wherein the second resource configuration information is used to indicate the at least one candidate configuration and/or optional value(s) of configuration parameter information requested by the terminal device.

38. The method of any one of claims 35 to 37, wherein the configuration parameter information requested by the terminal device comprises an absolute value of the configuration parameter requested by the terminal device or an incremental value of the configuration parameter relative to a current configuration.

39. The method of any one of claims 31 to 38, further comprising:
in a case that a first condition is satisfied, receiving, by the network device, the first reporting information sent by the terminal device.

40. The method of claim 39, wherein the first condition comprises at least one of:
transmission information of the target service changes in a first time window, wherein the first time window comprises N time units, and N is an integer greater than or equal to 2;
the transmission information of the target service changes in T time units in the first time window, wherein T is an integer less than N;
a probability that the transmission information of the target service changes in the first time window is greater than or equal to a first threshold;
a probability that the transmission information of the target service changes in the T time units is greater than or equal to a second threshold;
a change of a data amount of the target service is greater than or equal to a third threshold;
the data amount of the target service becomes 0;
the data amount of the target service is less than or equal to a fourth threshold;
a change of a period of the target service is greater than or equal to a fifth threshold;
a pre-configured resource matching the period of the target service does not exist in a current configuration;
a deactivated pre-configured resource matching the period of the target service exists in the current configuration; or
the target service is a predetermined service, wherein the predetermined service is determined based on a priority or service attribute.

41. The method of any one of claims 31 to 40, wherein the first reporting information further comprises first indication information, and the first indication information is used for indicating that the first reporting information is related to prediction information.

42. The method of any one of claims 23 to 41, wherein the first resource configuration information comprises at least one of:
configuration parameter(s) of the resource; (s)
the state of the resource(s);
a duration of the state of the resource(s);
whether to accept a first request sent by the terminal device; or
a fault-tolerant configuration of the resource(s).

43. The method of any one of claims 23 to 42, further comprising:
receiving, by the network device, third reporting information sent by the terminal device, wherein the third reporting information is used for the network device to determine whether to provide a fault-tolerant configuration.

44. The method of claim 43, wherein the third reporting information comprises at least one of:
measurement information of a downlink reference signal; or
whether the measurement information is less than or equal to a sixth threshold.

45. A terminal device, comprising:
a first communication module, configured to receive first resource configuration information from a network device, wherein the first resource configuration information is related to first information of a target service; and
a first processing module, configured to determine, based on the first resource configuration information, resource(s) for transmitting data and/or a state of the resource(s).

46. The terminal device of claim 45, wherein the first information comprises prediction information determined based on a first model.

47. The terminal device of claim 45 or 46, wherein the first information is related to whether transmission information of the target service changes.

48. The terminal device of claim 47, wherein a change of the transmission information comprises at least one of: an arrival of the target service; a change of a data amount of the target service; or a change of a period of the target service.

49. The terminal device of any one of claims 45 to 48, wherein the first information comprises at least one of:
a type of the target service;
the target service being an uplink service or a downlink service;
whether transmission information of the target service changes;
time information at which the transmission information of the target service changes;
probability information that the transmission information of the target service changes;
period information of the target service;
a data amount of the target service;
a duration of the target service; or
identifier information of the target service.

50. The method of claim 49, wherein whether the transmission information of the target service changes comprises at least one of:
whether the transmission information of the target service changes on each time unit in a first time window after a first time; or
whether the transmission information of the target service changes in the first time window.

51. The method of claim 49 or 50, wherein the time information at which the transmission information of the target service changes comprises:
an interval between a time at which the transmission information of the target service changes and a first time.

52. The method of claim 50 or 51, wherein the first information further comprises the first time.

53. The terminal device of any one of claims 45 to 52, wherein the first resource configuration information is determined based on the first information and/or sent first reporting information, related to the first information.

54. The terminal device of claim 53, wherein the first reporting information comprises at least one of:
a first report comprising the first information; or
a first request comprising request information for the resource(s), wherein the first request is determined based on the first information.

55. The terminal device of claim 54, wherein the first report further comprises at least one of:
a type of the target service;
the target service being an uplink service or a downlink service;
a first time used for determining a first time window in which transmission information of the target service changes;
identifier information of the target service; or
a priority of the target service.

56. The method of claim 55, wherein the first time is an operation time of a first model used to determine the first information, a time at which the first model determines the first information, or a time predicted by the first model.

57. The terminal device of claim 54 or 55, wherein the request information comprises at least one of:
a requested resource type;
index(es) of requested pre-configured resource(s);
a requested processing method for resource(s);
index(es) of requested candidate configuration(s) in at least one candidate configuration;
requested configuration parameter information;
starting time(s) of requested resource(s);
a number of requested resource(s); or
time length(s) of requested resource(s).

58. The method of claim 57, wherein the processing method comprises configuring, updating, recovering, activating, or deactivating.

59. The method of claim 57 or 58, wherein before receiving, by the terminal device, the first resource configuration information from the network device, the method further comprises:
receiving, by the terminal device, second resource configuration information from the network device, wherein the second resource configuration information is used to indicate the at least one candidate configuration and/or optional value(s) of configuration parameter information requested by the terminal device.

60. The method of any one of claims 57 to 60, wherein the configuration parameter information requested by the terminal device comprises an absolute value of the configuration parameter requested by the terminal device or an incremental value of the configuration parameter relative to a current configuration.

61. The terminal device of any one of claims 53 to 60, wherein the first communication module is further configured to:
send the first reporting information to the network device in a case that the first condition is satisfied.

62. The terminal device of claim 61, wherein the first condition comprises at least one of:
transmission information of the target service changes in a first time window, wherein the first time window comprises N time units, and N is an integer greater than or equal to 2;
the transmission information of the target service changes in T time units in the first time window, wherein T is an integer less than N;
a probability that the transmission information of the target service changes in the first time window is greater than or equal to a first threshold;
a probability that the transmission information of the target service changes in the T time units is greater than or equal to a second threshold;
a change of a data amount of the target service is greater than or equal to a third threshold;
the data amount of the target service becomes 0;
the data amount of the target service is less than or equal to a fourth threshold;
a change of a period of the target service is greater than or equal to a fifth threshold;
a pre-configured resource matching the period of the target service does not exist in a current configuration;
a deactivated pre-configured resource matching the period of the target service exists in the current configuration; or
the target service is a predetermined service, wherein the predetermined service is determined based on a priority or service attribute.

63. The terminal device of any one of claims 53 to 62, wherein the first reporting information further comprises first indication information, and the first indication information is used for indicating that the first reporting information is related to prediction information.

64. The terminal device of any one of claims 45 to 63, wherein the first resource configuration information comprises at least one of:
configuration parameter(s) of the resource(s);
the state of the resource(s);
a duration of the state of the resource(s);
whether to accept a sent first request; or
a fault-tolerant configuration of the resource(s).

65. The terminal device of any one of claims 45 to 64, wherein the first communication module is further configured to:
send third reporting information to the network device, wherein the third reporting information is used for the network device to determine whether to provide a fault-tolerant configuration.

66. The terminal device of claim 65, wherein the third reporting information comprises at least one of: measurement information of a downlink reference signal; or whether the measurement information is less than or equal to a sixth threshold.

67. A network device, comprising:
a second communication module, configured to send first resource configuration information to a terminal device, wherein the first resource configuration information is related to first information of a target service, and the first resource configuration information is used for the terminal device to determine resource(s) for transmitting data and/or a state of the resource(s).

68. The network device of claim 67, wherein the first information comprises prediction information determined based on a first model.

69. The network device of claim 67 or 68, wherein the first information is related to whether transmission information of the target service changes.

70. The network device of claim 69, wherein a change of the transmission information comprises at least one of: an arrival of the target service; a change of a data amount of the target service; or a change of a period of the target service.

71. The network device of any one of claims 67 to 69, wherein the first information comprises at least one of:
a type of the target service;
the target service being an uplink service or a downlink service;
whether transmission information of the target service changes;
time information at which the transmission information of the target service changes;
probability information that the transmission information of the target service changes;
period information of the target service;
a data amount of the target service;
a duration of the target service; or
identifier information of the target service.

72. The method of claim 71, wherein whether the transmission information of the target service changes comprises at least one of:
whether the transmission information of the target service changes on each time unit in a first time window after a first time; or
whether the transmission information of the target service changes in the first time window.

73. The method of claim 71 or 72, wherein the time information at which the transmission information of the target service changes comprises:
an interval between a time at which the transmission information of the target service changes and a first time.

74. The method of claim 72 or 73, wherein the first information further comprises the first time.

75. The network device of any one of claims 67 to 74, wherein the network device further comprises a second processing module to:
determine the first resource configuration information based on the first information and/or first reporting information, related to the first information, sent by the terminal device.

76. The network device of claim 75, wherein the first reporting information comprises at least one of:
a first report comprising the first information; or
a first request comprising request information of the terminal device for the resource, wherein the first request is determined based on the first information.

77. The network device of claim 76, wherein the first report further comprises at least one of:
a type of the target service;
the target service being an uplink service or a downlink service;
a first time used for determining a first time window in which transmission information of the target service changes;
identifier information of the target service; or
a priority of the target service.

78. The method of claim 77, wherein the first time is an operation time of a first model used to determine the first information, a time at which the first model determines the first information, or a time predicted by the first model.

79. The network device of any one of claims 76 to 78, wherein the request information comprises at least one of:
a resource type requested by the terminal device;
index(es) of pre-configured resource(s) requested by the terminal device;
a processing method for resource(s) requested by the terminal device;
index(es) of candidate configuration(s) requested by the terminal device in at least one candidate configuration;
configuration parameter information requested by the terminal device;
starting time of resource(s) requested by the terminal device;
a number of resource(s) requested by the terminal device; or
time length(s) of resource(s) requested by the terminal device.

80. The method of claim 79, wherein the processing method comprises configuring, updating, recovering, activating, or deactivating.

81. The method of claim 79 or 80, wherein the second communication module is further configured to:
send second resource configuration information to the terminal device, wherein the second resource configuration information is used to indicate the at least one candidate configuration and/or optional value(s) of configuration parameter information requested by the terminal device.

82. The method of any one of claims 79-81, wherein the configuration parameter information requested by the terminal device comprises an absolute value of the configuration parameter requested by the terminal device or an incremental value of the configuration parameter relative to a current configuration.

83. The network device of any one of claims 75 to 82, wherein the second communication module is further to:
receive the first reporting information sent by the terminal device in a case that a first condition is satisfied.

84. The network device of claim 83, wherein the first condition comprises at least one of:
transmission information of the target service changes in a first time window, wherein the first time window comprises N time units, and N is an integer greater than or equal to 2;
the transmission information of the target service changes in T time units in the first time window, wherein T is an integer less than N;
a probability that the transmission information of the target service changes in the first time window is greater than or equal to a first threshold;
a probability that the transmission information of the target service changes in the T time units is greater than or equal to a second threshold;
a change of a data amount of the target service is greater than or equal to a third threshold;
the data amount of the target service becomes 0;
the data amount of the target service is less than or equal to a fourth threshold;
a change of a period of the target service is greater than or equal to a fifth threshold;
a pre-configured resource matching the period of the target service does not exist in a current configuration;
a deactivated pre-configured resource matching the period of the target service exists in the current configuration; or
the target service is a predetermined service, wherein the predetermined service is determined based on a priority or service attribute.

85. The network device of any one of claims 75 to 84, wherein the first reporting information further comprises first indication information, and the first indication information is used for indicating that the first reporting information is related to prediction information.

86. The network device of any one of claims 67 to 85, wherein the first resource configuration information comprises at least one of:
configuration parameter(s) of the resource(s);
the state of the resource(s);
a duration of the state of the resource(s);
whether to accept a first request sent by the terminal device; or
a fault-tolerant configuration of the resource(s).

87. The network device of any of claims 67 to 86, wherein the second communication module is further to:
receive third reporting information sent by the terminal device, wherein the third reporting information is used to determine whether to provide a fault-tolerant configuration.

88. The network device of claim 87, wherein the third reporting information comprises at least one of: measurement information of a downlink reference signal; or whether the measurement information is less than or equal to a sixth threshold.

89. A terminal device comprising: a processor and a memory, wherein the memory is configured to store a computer program, and the processor is configured to invoke and execute the computer program stored in the memory to cause the terminal device to perform the method of any one of claims 1 to 22.

90. A network device comprising: a processor and a memory, wherein the memory is configured to store a computer program, and the processor is configured to invoke and execute the computer program stored in the memory to cause the network device to perform the method of any one of claims 23 to 44.

91. A chip comprising: a processor configured to invoke and execute a computer program from a memory to cause a device on which the chip is mounted to perform the method of any one of claims 1 to 44.

92. A computer readable storage medium for storing a computer program that, when executed by a device, causes a device to perform the method of any one of claims 1 to 44.

93. A computer program product comprising computer program instructions that cause a computer to perform the method of any one of claims 1 to 44.

94. A computer program that causes a computer to perform the method of any one of claims 1 to 44.

95. A communication system, comprising:
a terminal device, configured to perform the method of any one of claims 1 to 22; and
a network device, configured to perform the method of any one of claims 23 to 44.
